# EUROPÄISCHE PATENTSCHRIFT

(11) **EP 3 791 095 B1**
(45) Veröffentlichungstag und Bekanntmachung des Hinweises auf die Patenterteilung: **20.09.2023**
(21) Anmeldenummer: 19721616.1
(22) Anmeldetag: 02.05.2019
(51) Int. Cl.: F16K 31/08, F16K 27/02, F16K 31/06, H01F 7/16

(54) **PROZESSKOMPONENTE**
PROCESS COMPONENT
COMPOSANT DE PROCESSUS

(30) Priorität: 05.05.2018 DE 102018003658
(43) Veröffentlichungstag der Anmeldung: 17.03.2021
(73) Patentinhaber: GEA Tuchenhagen GmbH, 21514 Büchen (DE)
(72) Erfinder: ARNOLD, Wolfgang, 71577 Großerlach (DE); PRETTEREBNER, Julius, 71134 Aidlingen (DE); MAGNUS, Hans-Peter, 70499 Stuttgart (DE)
(74) Vertreter: Hauck Patentanwaltspartnerschaft mbB
(86) Internationale Anmeldenummer: PCT/EP2019/061250
(87) Internationale Veröffentlichungsnummer: WO 2019/215007

(56) Entgegenhaltungen:
- DE-A1-102009 002 215
- DE-A1-102013 113 112
- JP-A- S6 078 180
- JP-A- 2001 006 928
- JP-U- S5 431 940
- US-A- 6 047 672

## Beschreibung

Die Erfindung betrifft eine Prozesskomponente nach Anspruch 1.

In der Lebensmittelindustrie, der Biotechnologie und in der Pharmazie werden höchste Anforderungen an die Sauberkeit, Reinigbarkeit und Geschlossenheit der Produktionsanlagen und ihrer Prozesskomponenten gestellt.

In einer Art Prozesskomponente wird ein Stellkörper in ihrem Inneren zwischen zwei Endstellungen bewegt, beispielsweise in einem Ventil das Schließelement zwischen einer Offen- und einer Schließstellung. Die Herausforderung ist es nun, zur Herstellung hygienischer und aseptischer Bedingungen das Innere der Prozesskomponente gegen einen Außenraum abgedichtet zu halten und gleichzeitig vom Außenraum eine Bewegung des Stellkörpers im Inneren zu bewirken.

In der Ventiltechnik ist hierzu bekannt, den Durchtritt einer Schaltstange, die Antrieb und Schließelement miteinander verbindet, in das Ventilgehäuse mit einem Balg EP 945658 B1 (ASG) oder einer Membran WO2013/170931 A1 (206er) abzudichten. Die mechanische Belastung dieser Dichtelemente stellt jedoch eine Schwachstelle dar.

Vorteilhafter wäre es, die Bewegung des Schließelements berührungsfrei und ohne Schaltstange auszuführen. Dies ist im Bereich der so genannten Füllventile bekannt, mit denen beispielsweise Flaschen und Dosen befüllt werden.

Die DE 1 600 717 schlägt vor, das Schließelement als Magnetkern auszuführen, welcher in einer Magnetspule angeordnet ist und durch diese bewegt wird. in der Offenstellung wird das Schließelement an seiner gesamten Außenfläche von einem strömenden Medium umspült.

Die DE 600 21 062 stellt ein Ventil mit einem nadelförmigen Schließelement vor. In einer Offenstellung und in einer Schließstellung wird das Schließelement von den Kräften jeweils einer Dauermagnetanordnung gehalten. Jede Dauermagnetanordnung ist einer der Stellungen zugeordnet. Zu jeder Stellung ist zudem eine elektrische Spule vorgesehen, mit der das Schließelement gegen die Haltekraft der Dauermagnetanordnung der jeweils anderen Stellung bewegt werden kann.

Aus JP S60 78180A ist eine Ventilanordnung bekannt, bei der ein Stellkörper mit einem integrierten Dauermagneten innerhalb eines von einem Gehäuse umschlossenen Raums axial verstellbar ist. In dem Gehäuse sind zwei Elektromagneten in Axialrichtung beabstandet angeordnet sowie ein weiterer Dauermagnet. Der Stellkörper wird durch magnetische Abstoßung zwischen den Dauermagneten im Gehäuse und im Stellkörper in einer ersten Endstellung festgelegt. Durch Bestromung eines der im Gehäuse angeordneten Elektromagneten kann die Magnetkraft des im Gehäuse angeordneten Dauermagneten ausgeglichen werden, während durch Bestromung des zweiten Elektromagneten im Gehäuse der Stellkörper aus der ersten Endstellung bewegt werden kann.

Aus JP 2001 006928 A ist eine weitere Ventilanordnung bekannt, bei der ein Stellkörper mit einem Dauermagneten durch magnetische Abstoßung gegenüber zwei an einem Gehäuse vorgesehenen Dauermagneten in einer axialen Mittelposition gehalten wird. Durch wahlweise Ansteuerung von am Gehäuse angeordneten Elektromagneten kann der Stellkörper unter Überwindung der Abstoßungskraft der Dauermagneten zwischen einer ersten und zweiten Endstellung bewegt werden.

Aus DE 10 2013 113 112 A1 ist eine weitere Ventilanordnung bekannt, bei der ein Ventilkolben mit einem integrierten Dauermagneten durch magnetische Abstoßung gegenüber in einem Gehäuse angeordneten Dauermagneten in einer ersten Endstellung gehalten wird. Durch Bestromen von Elektromagneten im Gehäuse kann der Stellkörper unter Überwindung der Abstoßungskraft der Dauermagneten axial verstellt werden.

Aus DE 10 2009 002 215 A1 ist eine weitere Ventilanordnung bekannt, bei der ein Stellkörper mit integrierten Dauermagneten durch Zusammenwirken mit in einem Gehäuse angeordneten Dauermagneten in einer von zwei Endstellungen gehalten wird. Durch Bestromen jeweils eines von zwei im Gehäuse angeordneten Elektromagneten kann der Stellkörper unter Überwindung der Anziehungskraft zwischen den Dauermagneten zwischen seinen beiden Endstellungen verfahren werden.

Eine weitere elektromagnetisch gesteuerte Ventilanordnung ist bekannt aus US 6 047 672 A. JP S5431940 U offenbart eine Prozesskomponente nach dem Oberbegriff des Anspruchs 1. Dabei wird ein Permanentmagnet zwischen zwei gegenpolig gewickelten Spulen durch magnetische Abstoßungskräfte bewegt.

Diese Lösungen sind zum Teil seit Jahrzehnten bekannt und werden für vergleichsweise kleine Fluidströmungen eingesetzt. Sie sind jedoch bisher noch nie für größere Rohrleitungsquerschnitte, beispielsweise im Durchmesserbereich von 50mm bis 200mm, eingesetzt worden.

Die Aufgabe der Erfindung war daher, eine für große Leitungsquerschnitte skalierbare Prozesskomponente mit Magnetanordnung zu schaffen.

Diese Aufgabe wird gelöst durch eine Prozesskomponente mit den Merkmalen des ersten Anspruchs. Die abhängigen Ansprüche geben vorteilhafte Weiterbildungen dieser Prozesskomponente an.

Die Prozesskomponente umfasst ein Gehäuse, einen Stellkörper, welcher in eine erste Endstellung und eine zweite Endstellung bringbar ist, und eine Verstellanordnung, mit der der Stellkörper entlang einer axialen Richtung aus der ersten Endstellung in die zweite Endstellung und umgekehrt bringbar ist. Diese Verstellanordnung besitzt eine erste elektrische Spule und eine zweite elektrische Spule und wirkt mit einer ersten Dauermagnetanordnung zusammen, die am Stellkörper angeordnet ist. In der ersten Endstellung liegt der Stellkörper an einem ersten mechanischen Anschlag an. Am Gehäuse ist eine zweite Dauermagnetanordnung vorgesehen, die mit der ersten Dauermagnetanordnung zusammenwirkt. Die Verstellanordnung ist zwischen einem ersten Anschluss und einem zweiten Anschluss der Prozesskomponente angeordnet, und die Prozesskomponente weist in wenigstens einer Stellung des Stellkörpers zwischen erstem Anschluss und zweitem Anschluss eine durchgehende Fluidverbindung auf. Die Skalierbarkeit wird dadurch erreicht, dass die erste elektrische Spule eingerichtet ist, bei Bestromung das in der ersten Stellung zwischen erster und zweiter Dauermagnetanordnung bestehende magnetische Feld zu kompensieren, und die zweite elektrische Spule eingerichtet ist, eine Bewegung des Stellkörpers bei Bestromung der ersten Spule in axialer Richtung zu bewirken. Die erste elektrische Spule muss in ihrer Auslegung, beispielsweise der Zahl ihrer Windungen, und Bestromung nur so beschaffen sein, dass sie das Magnetfeld zwischen erster und zweiter Dauermagnetanordnung kompensiert. Dies verringert den Materialeinsatz beim Bau der Spule und den Energieaufwand zum Betreiben. So wird ermöglicht, eine Prozesskomponente auch für große Rohrleitungsdurchmesser kostengünstig herzustellen und zu betreiben. Unterstützt wird dieser Vorteil durch den ersten mechanischen Anschlag, der eine mechanische Unterstützung der Positionierung in der ersten Endstellung schafft.

In einer Weiterbildung wird auch die zweite Endstellung durch einen zweiten mechanischen Anschlag festgelegt und so der vorgenannte Vorteil vertieft.

Die vorgenannten Vorteile kommen besonders zur Geltung, wenn die erfindungsgemäße Prozesskomponente als Ventil ausgeführt ist, das Gehäuse einen Ventilsitz umfasst und am Stellkörper ein Verschlusselement angeordnet ist, welche in der ersten Endstellung dichtend mit dem Ventilsitz zusammenwirkt. Eine Fluidströmung, insbesondere Liquidströmung, in einem Ventil führt zu hohen Kräften, die auf das Verschlusselement einwirken. Die erfindungsgemäße Ausführung erlaubt es, kostengünstig diese Kräfte auch bei Skalierung des Ventils in Baugrößen der Lebensmitteltechnik handzuhaben.

Eine weitere bauliche Vereinfachung mit Kostenverringerung wird erreicht, indem der erste mechanische Anschlag den Ventilsitz umfasst.

Anhand von Ausführungsbeispielen sollen die Erfindung erklärt und die Vorteile erläutert werden.

Es zeigen:
**Fig. 1****:** Längsschnitt durch eine nicht erfindungsgemäße Prozesskomponente;
**Fig. 2****:** Längsschnitt durch eine nicht erfindungsgemäße Prozesskomponente in einer ersten Weiterbildung;
**Fig. 3****:** Querschnitt durch die Prozesskomponente der ersten Weiterbildung entlang der Linie A-A;
**Fig. 4****:** Längsschnitt durch eine erfindungsgemäße Prozesskomponente.

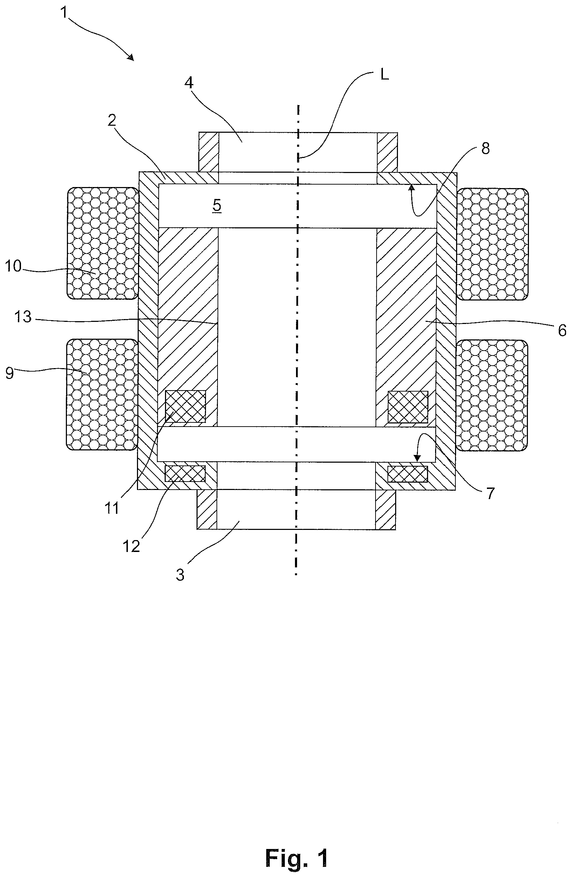

In **Fig. 1** ist ein Schnitt entlang einer Längsachse **L** durch eine nicht erfindungsgemäße Prozesskomponente **1** mit einem Gehäuse **2** dargestellt. Das Gehäuse besitzt einen ersten Anschluss **3** und einen zweiten Anschluss **4**, mit denen die Prozesskomponente **1** in eine Prozessanlage integrierbar ist. Erster Anschluss **3** und zweiter Anschluss **4** stellen eine Fluidverbindung zu einem Innenraum **5** innerhalb des Gehäuses **2** her.

Im Innenraum **5** ist ein Stellkörper **6** beweglich angeordnet, insbesondere verschiebbar entlang der Längsachse **L** von einer ersten Endstellung in einer zweiten Endstellung. Ein erster mechanischer Anschlag **7** ist im Innenraum **5** des Gehäuses **2** vorgesehen, an dem der Stellkörper **6** in der ersten Endstellung zur Anlage kommt. Die zweite Endstellung befindet sich in einem Abstand von der ersten Endstellung entlang der Längsachse **L.** Es kann ein zweiter mechanischer Anschlag **8** vorgesehen sein, an dem der Stellkörper **6** in der zweiten Endstellung Anlage findet.

Außerhalb des Innenraumes **5** befindet sich am Gehäuse **2** der Prozesskomponente **1** eine Verstellanordnung, die eine erste elektrische Spule **9** und eine zweite elektrische Spule **10** umfasst.

Eine erste Dauermagnetanordnung **11** ist am Stellkörper angeordnet, vorteilhaft ist sie gegen Fluid gekapselt ausgeführt. Eine zweite Dauermagnetanordnung**12** ist am Gehäuse **2** vorgesehen. Vorteilhaft ist sie dem ersten mechanischen Anschlag **8** räumlich zugeordnet, so dass erste und zweite Dauermagnetanordnung **11** und **12** einen geringen Abstand zueinander aufweisen, wenn sich der Stellkörper **6** in der ersten Endstellung befindet. Die Dauermagnetanordnungen **11** und **12** sind so ausgelegt, dass der Stellkörper durch die Anziehungskraft der Dauermagnete **11** und **12** in der ersten Endstellung festgelegt wird.

Die erste elektrische Spule **9** der Verstellanordnung ist so ausgelegt und angeordnet, dass sie bei entsprechend zur Auslegung und Anordnung angepasster Bestromung ein Magnetfeld erzeugt, welches das Magnetfeld zwischen den Dauermagnetanordnungen **11** und **12** kompensiert, so dass die Festlegung des Stellkörpers **6** in der ersten Endstellung aufgehoben wird.

Die zweite elektrische Spule **10** der Verstellanordnung ist in einem axialen Abstand entlang der Längsachse **L** angeordnet. Sie ist so ausgelegt und angeordnet, dass sie bei entsprechend zur Auslegung und Anordnung bei Bestromung ein Magnetfeld erzeugt, welches auf den Stellkörper **6** einwirkt. Dieses ist so bemessen, dass es eine Bewegung des Stellkörpers **6** aus der ersten Endstellung entlang der Längsachse **L** bewirkt, wenn die erste elektrische Spule **9** bestromt und die Haltekraft der Dauermagnetanordnungen **11** und **12** kompensiert ist.

Der Stellkörper **6** weist einen Hohlkanal **13** auf, welcher eine Fluidverbindung zwischen erstem Anschluss **3** und zweitem Anschluss **4** der Prozesskomponente **1** in wenigstens einer von erster und zweiter Endstellung schafft, so dass die Prozesskomponente **1** in wenigstens einer der Stellungen von Fluid, insbesondere Liquid, durchströmbar ist. Der Hohlkanal **13** kann im Zentrum des Stellkörpers entlang der Längsachse **L** ausgebildet sein.

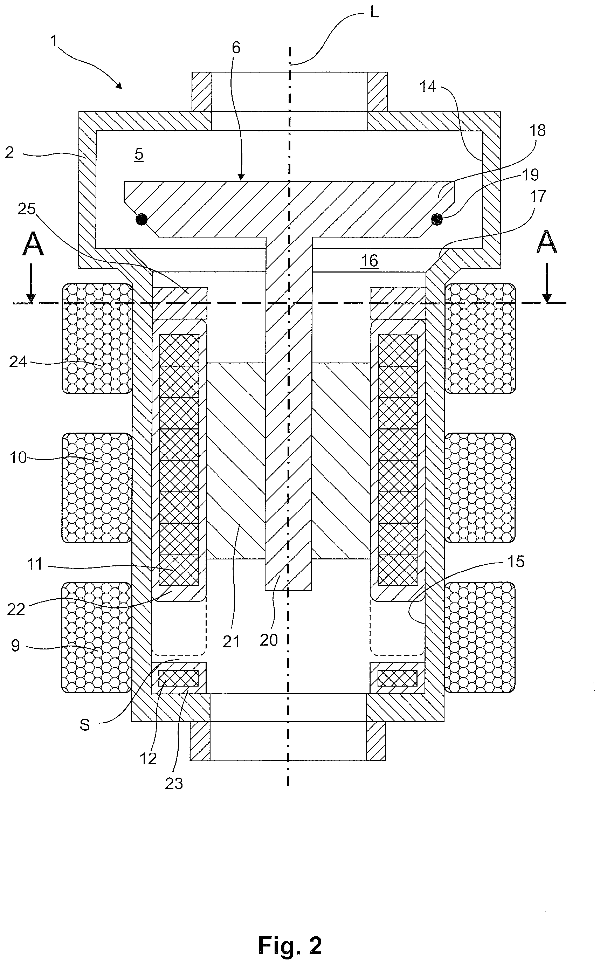

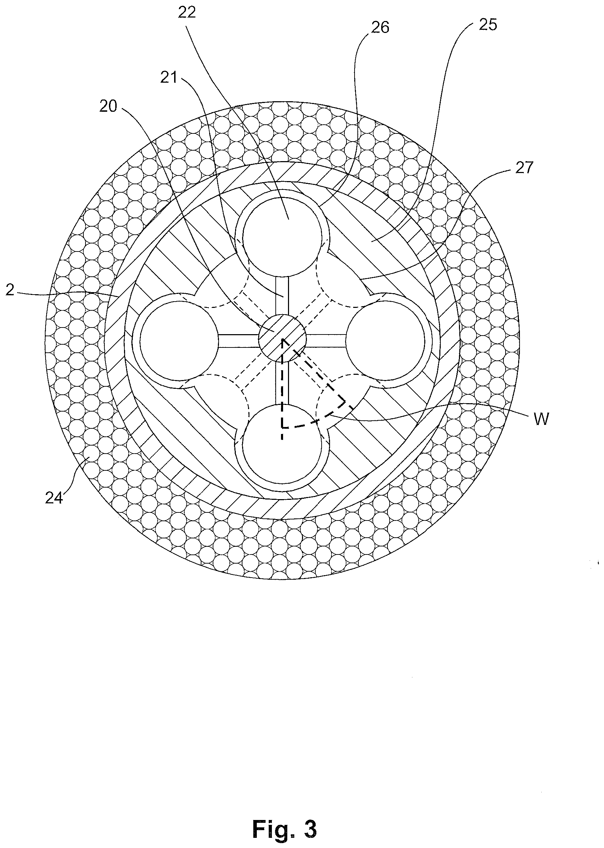

Eine erste nicht erfindungsgemäße Weiterbildung der Prozesskomponente **1** ist in **Fig. 2** und **Fig. 3** gezeigt.

Dabei ist in **Fig. 2** ein Schnitt entlang der Längsachse **L** dargestellt, während **Fig. 3** einen Schnitt quer zur Längsachse **L** entlang der Schnittlinie A-A zeigt.

Die Prozesskomponente **1** ist in dieser Weiterbildung als Ventil ausgeführt.

Der Innenraum **5** der Prozesskomponente **1** ist in einer ersten Teilkammer **14** und einer zweiten Teilkammer **15** unterteilt. Die Teilkammern **14** und **15** sind mit Hilfe eines Durchlasses **16** fluidverbunden. An dem Durchlass **16** kann ein Ventilsitz **17** ausgebildet sein. Die erste Teilkammer **14** ist dem ersten Anschluss **3** zugeordnet, die zweite Teilkammer **15** dem zweiten Anschluss **4.** Dadurch ist ein Fluidpfad von erstem Anschluss **3** über erste Teilkammer **14,** diesem folgenden dem Durchlass **16,** daran anschließend der zweiten Teilkammer **15** zum zweiten Anschluss **4** gebildet.

Der Stellkörper **6** weist einen als ein Verschlusselement wirkenden Teller **18** auf, der in der ersten Teilkammer **14** angeordnet ist. Er ist in mittels der Verstellanordnung in Kontakt mit dem Ventilsitz **17** bringbar. Am Teller **18** kann vorzugsweise eine Dichtung **19** vorgesehen sein, die mit dem Ventilsitz **17** zusammenwirkt, um einen flüssigkeitsdichten Verschluss des Durchlasses **16** bei Aufsitzen des Tellers **18** auf den Ventilsitz **17** zu gewährleisten.

Der Stellkörper weist einen Tragkörper **20** auf, an dem der Teller **18** befestigt ist. Vorzugsweise ist der Tragkörper als zylindrischer Körper ausgebildet und in der zweiten Teilkammer **15** angeordnet, wo er von der Längsachse **L** durchsetzt ist. Von dem Tragkörper **20** erstreckt sich geradlinig oder gekrümmt wenigstens ein Halter **21** in einer radialen Richtung, an dessen radial äußerem Ende eine Gondel **22** angebracht ist, in deren Inneren die erste Dauermagnetanordnung **11** angeordnet ist. In diesem Beispiel besitzt die erste Dauermagnetanordnung **11** mehrere Dauermagnete, die in der durch die Längsachse **L** definierte axiale Richtung gestapelt sind, wodurch eine Feldverstärkung bewirkt wird. Die Gondel **22** ist die Dauermagnetanordnung **11** fluiddicht umschließend ausgeführt. Die Gondel **22** kann in ihrer Längserstreckung zylindrisch ausgeführt sein. Dies bewirkt einen linienartigen Spalt zwischen Gondel **22** und Gehäuse **2** bzw. eine linienartige Berührung des Gehäuses **2** durch die Gondel **22.**

Außerhalb des die zweiten Teilkammer **15** umgebenden Teil des Gehäuses **2** ist die Verstellanordnung angeordnet. Sie umfasst eine erste elektrische Spule **9,** die einer ersten Endstellung des Stellkörpers **6** räumlich zugeordnet ist. Dies kann erreicht werden, indem die Wicklungen der ersten elektrischen Spule **9** um das Gehäuse **2** herum gewickelt sind und sich in axialer Richtung auf Höhe der zweiten Dauermagnetanordnung **12** befinden. Diese zweite Dauermagnetanordnung **12** befindet sich in einer fluiddichten Einhausung **23.** Die erste elektrische Spule **9** besitzt vorteilhaft eine axiale Erstreckung, die eine Überlapp mit der ersten Dauermagnetanordnung **11** bedeutet, wenn sich der Stellkörper **6** in der ersten Endstellung befindet. In dieser ersten Endstellung besteht vorzugweise ein Spalt **S** zwischen Gondel **22** und Einhausung **23,** während gleichzeitig der erste mechanische Anschlag durch den Ventilsitz geschaffen ist, mit dem sich in der ersten Endstellung der Teller **18** in direktem oder durch die Dichtung **19** in mittelbarem Kontakt befindet. Die Gondel **22** in ihrer ersten Endstellung ist in **Fig. 2** durch gestrichelte Linien dargestellt.

Die erste elektrische Spule **9** ist ausgelegt, ein Magnetfeld zu erzeugen, welches das sich in der ersten Endstellung zwischen erster Dauermagnetanordnung **11** und zweiten Dauermagnetanordnung **12** ausbildende Magnetfeld zu kompensieren.

In axialer Richtung auf der dem Ventilsitz **17** zugewandten Seite der ersten elektrischen Spule **9** befindet sich die zweite elektrische Spule **10.** Deren Wicklungen sind vorzugsweise das Gehäuse **2** umgebend ausgeführt und so ausgelegt, dass durch Bestromung der zweiten elektrischen Spule **10** eine Bewegung des Stellkörpers **6** entlang der Längsachse **L** bewirkt wird, wenn das Magnetfeld zwischen erster und zweiter Dauermagnetanordnung **11** und **12** durch die bestromte erste elektrische Spule **9** kompensiert ist.

Die Verstellanordnung weist eine dritte elektrische Spule **24** auf. Diese ist entlang der Längsachse **L** auf einer Höhe angeordnet, in welcher sich der Stellkörper **6** in der zweiten Endstellung befindet. Ein Ring **25** ist vorgesehen, an dem die Gondel **22** in der zweiten Endstellung zur Anlage kommt und er somit einen zweiten mechanischen Anschlag bildet. Im Ring **25** kann ein Dauermagnet vorgesehen sein, der mit der ersten Dauermagnetanordnung **11** in der Gondel **22** zusammenwirkt und den Stellkörper **6** in der zweiten Endstellung hält. Alternativ kann der Ring **25** aus einem magnetisierbaren Material geschaffen sein, mit dem die erste Dauermagnetanordnung **11** wechselwirkt und eine Fixierung in der zweiten Endstellung bewirkt. Der Ring **25** kann aus mehreren Segmenten, die in Umfangsrichtung verteilt sind, aufgebaut sein. Der Stellkörper **6** wird durch Magnetkräfte in der zweiten Endstellung gehalten, eine Bestromung einer der elektrischen Spulen **9, 10** und **24** ist dann nicht notwendig. Die dritte elektrische Spule **24** ist so dimensioniert, dass bei Bestromung die Wirkung der ersten Dauermagnetanordnung **11** kompensiert wird.

Der zusätzliche Vorteil dieser Anzahl Spulen ist die Möglichkeit, den Stellkörper durch Bestromen der zweiten elektrischen Spule **10** in einer Position zwischen erster und zweiter Endstellung zu halten. Diese Stellung erlaubt das Reinigen des Ventils.

Eine vorteilhafte Gestaltung des Rings **25** zeigt **Fig. 3** in einem Querschnitt entlang der Linie **A-A.** Stellkörper **6** und Ring **25** sind so geformt, dass durch Verdrehung des Stellkörpers **6** um einen Winkel **W,** im gezeigten Beispiel beträgt dieser 45°, der Stellkörper in eine Position gebracht wird, in der er entlang der Längsachse L durch den Ring **25** hindurchführbar ist. Im Beispiel ist diese Formgebung gelöst, indem der Ring **25** eine Ausnehmung **26** besitz deren Form einen Durchtritt der Gondel **22** durch den Ring **25** erlaubt. Der Ring **25** besitzt zudem eine Zentralöffnung **27,** durch welche Tragkörper **20** und Halter **21** hindurchführbar sind.

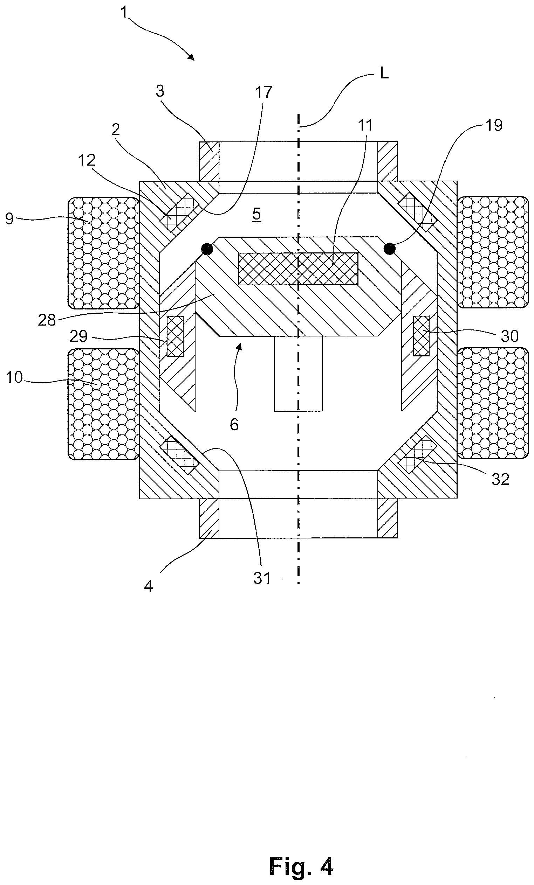

Eine erfindungsgemäße Prozesskomponente **1** zeigt **Fig. 4****.** Diese Prozesskomponente ist als Ventil ausgeführt. Der Stellkörper **6** weist einen Verschlusskörper **28** auf, der in unmittelbaren oder, bei Vorhandensein einer Dichtung **19,** in mittelbaren dichtenden Kontakt mit einem Ventilsitz **17** bringbar ist, in der er den ersten Anschluss **3** verschließt.

Am Umfang des Verschlusskörpers **28** ist wenigstens ein Flügel **29** vorgesehen, der eine Führung und Zentrierung des Verschlusskörpers **28** im Gehäuse **2** der Prozesskomponente **1** bewirkt, damit sich der Verschlusskörper **28** in umströmbarem Abstand zu den Wandungen der Prozesskomponente **1** befindet, wenn der Verschlusskörper **28** vom Ventilsitz **17** abgehoben ist. Das Ventil ist dann durchströmbar.

Die erste Dauermagnetanordnung **11** ist im Verschlusskörper **28** angeordnet und fluiddicht von diesem umschlossen. Im Flügel **29** ist eine dritte Dauermagnetanordnung **30** vorgesehen, die die Wirkung der ersten Dauermagnetanordnung **11** unterstützt.

Der Stellkörper **6** ist entlang der Längsachse **L** zwischen einer ersten und einer zweiten Endstellung bewegbar. Dazu ist am Gehäuse **2** eine Verstellanordnung vorgesehen. Diese umfasst die erste elektrische Spule **9,** deren Wicklungen das Gehäuse **2** umgeben. Die Spule **9** ist eingerichtet, ein Magnetfeld zu erzeugen, das das Magnetfeld kompensiert, welches sich zwischen erster Dauermagnetanordnung **11** und zweiter Dauermagnetanordnung **12** ausbildet, wenn der Verschlusskörper auf dem Ventilsitz aufsitzt. Diese Position des Stellkörpers **6** ist die erste Endstellung der Bewegung. Der Ventilsitz **17** bildet einen mechanischen Anschlag für die Bewegung des Stellkörpers.

Auf der dem Ventilsitz in axialer Richtung **L** gegenüberliegenden Seite des Innenraums **5** ist im Gehäuse **2** ein Gegensitz **31** ausgebildet, an dem der Flügel **29** in der zweiten Endstellung zur Anlage kommt. Am Gegensitz **31** kann eine vierte Dauermagnetanordnung **32** vorgesehen sein, die den Stellkörper **6** in der zweiten Endstellung, die die Offenstellung des Ventils bedeutet, durch Zusammenwirken mit der ersten Dauermagnetanordnung **11** fixiert.

Die zweite elektrische Spule **10** weist Wicklungen auf, die um das Gehäuse **2** herumgeführt sind. Sie ist entlang der Längsachse **L** so angeordnet, dass sie der zweiten Endstellung zugeordnet ist.

Wenn sich der Stellkörper **6** in der ersten Endstellung befindet und der Verschlusskörper **28** den ersten Anschluss **3** verschließt, ist das Ventil stromlos geschlossen, da erste und zweite Dauermagnetanordnung **11** und **12** auf magnetische Weise eine Schließkraft erzeugen. Zum Öffnen wird die erste elektrische Spule **9** bestromt und das die Schließkraft erzeugende Magnetfeld kompensiert. Eine zusätzliche Bestromung der zweiten elektrischen Spule **10** bewirkt dann eine Bewegung der Stellkörpers **6** entlang der Längsachse **L,** die bis zur zweiten Endstellung ausgeführt sein kann. In der zweiten Endstellung wird der Stellkörper durch die Wirkung der ersten Permanentmagnetanordnung **11** gehalten, das Ventil ist dann stromlos geöffnet. Die Magnetfelder und -Kräfte in dieser Stellung sind durch die dritte und vierte Dauermagnetanordnung **30** und **32** unterstützbar. Zum Schließen des Ventils wird zunächst die zweite elektrische Spule 10 bestromt, um das haltende Magnetfeld zu kompensieren. Eine zusätzliche Bestromung der ersten elektrischen Spule **9** bewegt den Stellkörper **6** in Richtung der ersten Endstellung, der Schließstellung des Ventils.

Durch geeignete gleichzeitige Bestromung von erster und zweiter elektrischer Spule **9** und **10** kann der Stellkörper in einer mittleren Position, wie in der **Fig. 4** dargestellt, gehalten werden. Dies wird durch die dritte Dauermagnetanordnung **30** vereinfacht, da leichter hohe Feldstärken erreichbar sind.

### Bezugszeichenliste

- 1: Prozesskomponente
- 2: Gehäuse
- 3: erster Anschluss
- 4: zweiter Anschluss
- 5: Innenraum
- 6: Stellkörper
- 7: erster mechanischer Anschlag
- 8: zweiter mechanischer Anschlag
- 9: erste elektrische Spule
- 10: zweite elektrische Spule
- 11: erste Dauermagnetanordnung
- 12: zweite Dauermagnetanordnung
- 13: Hohlkanal
- 14: erste Teilkammer
- 15: zweite Teilkammer
- 16: Durchlass
- 17: Ventilsitz
- 18: Teller
- 19: Dichtung
- 20: Tragkörper
- 21: Halter
- 22: Gondel
- 23: Einhausung
- 24: dritte elektrische Spule
- 25: Ring
- 26: Ausnehmung
- 27: Zentralöffnung
- 28: Verschlusskörper
- 29: Flügel
- 30: dritte Dauermagnetanordnung
- 31: Gegensitz
- 32: vierte Dauermagnetanordnung

- L: Längsachse
- S: Spalt
- W: Winkel

## Patentansprüche

1. Prozesskomponente mit einem Gehäuse (2), einem Stellkörper (6), welcher in eine erste Endstellung und eine zweite Endstellung bringbar ist, mit einer Verstellanordnung, mit der der Stellkörper entlang einer axialen Richtung (L) aus der ersten Endstellung in die zweite Endstellung und umgekehrt bringbar ist, welche Verstellanordnung eine erste elektrische Spule (9) und eine zweite elektrische Spule (10) umfasst, und welche mit einer ersten Dauermagnetanordnung (11) zusammenwirkt, die am Stellkörper (6) angeordnet ist, und in der ersten Endstellung der Stellkörper (6) an einem ersten mechanischen Anschlag anliegt, wobei das Gehäuse (2) einen Ventilsitz (17) umfasst und am Stellkörper (6) ein Verschlusselement angeordnet ist, welches in der ersten Endstellung dichtend mit dem Ventilsitz (17) zusammenwirkt, und wobei der erste mechanische Anschlag den Ventilsitz (17) umfasst, weiterhin mit einer am Gehäuse (2) vorgesehenen zweiten Dauermagnetanordnung (12), die mit der ersten Dauermagnetanordnung (11) zusammenwirkt, und die Verstellanordnung zwischen einem ersten Anschluss (3) und einem zweiten Anschluss (4) der Prozesskomponente angeordnet ist und die Prozesskomponente in wenigstens einer Stellung des Stellkörpers (6) zwischen erstem Anschluss (3) und zweitem Anschluss (4) eine durchgehende Fluidverbindung aufweist, wobei die erste Dauermagnetanordnung (11) und die zweite Dauermagnetanordnung (12) so ausgelegt sind, dass der Stellkörper (6) durch die Anziehungskraft der Dauermagnetanordnungen (11, 12) in der ersten Endstellung festgelegt wird, wobei die erste elektrische Spule (9) eingerichtet ist, bei Bestromung das in der ersten Stellung zwischen erster und zweiter Dauermagnetanordnung (11, 12) bestehende magnetische Feld zu kompensieren, so dass die Festlegung des Stellkörpers (6) in der ersten Endstellung aufgehoben wird, und die zweite elektrische Spule (10) eingerichtet ist, eine Bewegung des Stellkörpers (6) bei Bestromung der ersten Spule (9) in axialer Richtung zu bewirken, wobei der Stellkörper (6) einen Verschlusskörper (28) umfasst,
**dadurch gekennzeichnet, dass**
die erste Dauermagnetanordnung (11) in dem Verschlusskörper (28) angeordnet ist und wenigstens ein sich in Bewegungsrichtung erstreckender Flügel (29) am Verschlusskörper (28) vorgesehen ist, und dass der Flügel (29) eine dritte Dauermagnetanordnung (30) umfasst, welche mit der zweiten Dauermagnetanordnung (12) zusammenwirkt.

2. Prozesskomponente nach Anspruch 1, **dadurch gekennzeichnet, dass** ein zweiter mechanischer Anschlag die Position des Stellkörpers (6) in der zweiten Endstellung definiert.

3. Prozesskomponente nach einem der vorhergehenden Ansprüche, **dadurch gekennzeichnet, dass** der zweite Anschlag einen Dauermagneten (32) umfasst, welcher in der zweiten Endstellung mit der ersten Dauermagnetanordnung (11) zusammenwirkt.

## Claims

1. A process component having a housing (2), an actuator (6) which can be brought into a first end position and a second end position, having an adjusting arrangement by means of which the actuator can be brought out of the first end position into the second end position and vice versa in an axial direction (L), which adjusting arrangement comprises a first electric coil (9) and a second electric coil (10), and which cooperates with a first permanent magnet arrangement (11) which is arranged on the actuator (6), and the actuator (6) rests against a first mechanical stop in the first end position, wherein the housing (2) comprises a valve seat (17) and a closing element which cooperates in a sealing manner with the valve seat (17) in the first end position is arranged on the actuator (6), and wherein the first mechanical stop comprises the valve seat (17), further having a second permanent magnet arrangement (12) which is provided on the housing (2) and which cooperates with the first permanent magnet arrangement (11), and the adjusting arrangement is arranged between a first connection (3) and a second connection (4) of the process component and the process component comprises a continuous fluid connection between the first connection (3) and the second connection (4) in at least one position of the actuator (6), wherein the first permanent magnet arrangement (11) and the second permanent magnet arrangement (12) are designed such that the actuator (6) is set in the first end position by means of the attractive force of the permanent magnet arrangements (11, 12), wherein the first electric coil (9) is configured to compensate for the magnetic field that exists in the first position between the first and second permanent magnet arrangement (11, 12) during energization, such that the setting of the actuator (6) in the first end position is cancelled, and the second electric coil (10) is configured to cause a movement of the actuator (6) in an axial direction during energization of the first coil (9), wherein the actuator (6) comprises a closing body (28), **characterized in that** the first permanent magnet arrangement (11) is arranged in the closing body (28) and at least one blade (29) that extends in the direction of movement is provided on the closing body (28), and **in that** the blade (29) comprises a third permanent magnet arrangement (30) which cooperates with the second permanent magnet arrangement (12).

2. The process component according to claim 1, **characterized in that** a second mechanical stop defines the position of the actuator (6) in the second end position.

3. The process component according to any one of the preceding claims, **characterized in that** the second stop comprises a permanent magnet (32) which cooperates with the first permanent magnet arrangement (11) in the second end position.

## Revendications

1. Composant de processus avec un carter (2), un organe de réglage (6) lequel peut être mis dans une première position de fin de course et dans une deuxième position de fin de course, avec un système de déplacement qui permet de faire passer l'organe de réglage de la première position de fin de course à la deuxième position de fin de course, et inversement, dans une direction axiale (L), lequel système de déplacement comprend une première bobine électrique (9) et une deuxième bobine électrique (10), et lequel coopère avec un premier agencement d'aimant permanent (11), lequel est disposé sur l'organe de réglage (6), et l'organe de réglage (6) étant contre une première butée mécanique dans la première position de fin de course, le carter (2) comprenant un siège de soupape (17) et un élément de fermeture étant disposé sur l'organe de réglage (6), lequel coopère de façon étanche avec le siège de soupape (17) dans la première position de fin de course, et la première butée mécanique comprenant le siège de soupape (17), avec en outre un deuxième agencement d'aimant permanent (12) prévu sur le carter (2), lequel coopère avec le premier agencement d'aimant permanent (11), et le système de déplacement étant disposé entre un premier raccordement (3) et un deuxième raccordement (4) du composant de processus et le composant de processus présentant dans au moins une position de l'organe de réglage (6) une liaison fluidique traversante entre le premier raccordement (3) et le deuxième raccordement (4),
le premier agencement d'aimant permanent (11) et le deuxième agencement d'aimant permanent (12) étant conçus de telle sorte que l'organe de réglage (6) est fixé dans la première position de fin de course par la force d'attraction des agencements d'aimant permanent (11, 12), lors d'une alimentation électrique, la première bobine électrique (9) étant agencée pour compenser le champ magnétique existant dans la première position entre les premier et deuxième agencements d'aimant permanent (11, 12), de telle sorte que la fixation de l'organe de déplacement (6) dans la première position est annulée, et la deuxième bobine électrique (10) étant agencée pour entraîner un mouvement de l'organe de réglage (6) dans la direction axiale lors de l'alimentation électrique de la première bobine (9),
l'organe de réglage (6) comprenant un organe de fermeture (28), **caractérisé en ce que** le premier agencement d'aimant permanent (11) est disposé dans l'organe de fermeture (28) et **en ce qu'**au moins une aile (29) s'étendant dans la direction de déplacement est prévue sur l'organe de fermeture (28), et **en ce que** l'aile (29) comprend un troisième agencement d'aimant permanent (30), lequel coopère avec le deuxième agencement d'aimant permanent (12).

2. Composant de processus selon la revendication 1, **caractérisé en ce qu'**une deuxième butée mécanique définit la position de l'organe de réglage (6) dans la deuxième position de fin de course.

3. Composant de processus selon l'une des revendications précédentes, **caractérisé en ce que** la deuxième butée comprend un aimant permanent (32), lequel coopère avec le premier agencement d'aimant permanent (11) dans la deuxième position de fin de course.
